# EUROPEAN PATENT APPLICATION

(11) **EP 4 611 136 A1**
(43) Date of publication of application: **03.09.2025**
(21) Application number: 25160225.6
(22) Date of filing: 26.02.2025
(51) Int. Cl.: H01M 50/178, H01M 50/184, H01M 50/186, H01M 50/557, H01M 50/193, H01M 10/052

(54) **TAB ASSEMBLY, SECONDARY BATTERY, BATTERY MODULE, AND ELECTRICAL DEVICE**

(30) Priority: 26.02.2024 CN 202410211581
(71) Applicant: Ningde Amperex Technology Limited, Zhangwan Town, Jiaocheng District, Fujian Province Ningde City Fujian 352100 (CN)
(72) Inventor: GAO, Heng, Ningde City, Fujian Province, China, 352100 (CN)
(74) Representative: Icosa

(57) **Abstract**

A tab assembly (100) includes a tab (1) and a tab adhesive (2). Along a thickness direction (X) of the tab (1), the tab (1) includes a first surface (11) and a second surface (12) opposite to each other. Both the first surface (11) and the second surface (12) are provided with the tab adhesive (2). The tab adhesive (2) provided on the first surface (11) and the tab adhesive (2) provided on the second surface (12) jointly wrap the tab (1). Along a length direction (Y) of the tab (1), the tab (1) includes a first end (1a) and a second end (1b) opposite to each other. The tab adhesive (2) includes a first layer (21) and a second layer (22). The first layer (21) and the second layer (22) are stacked along a direction from the first end (1a) to the second end (1b). The first layer (21) includes a first adhesive body (211). The second layer (22) includes at least one layer of a second adhesive body (221). A material of the second adhesive body (221) comprises one or more selected from the group consisting of polyethylene, polypropylene and polyethylene terephthalate. A thickness of the tab (1) is Tᵢ, and a thickness of the second adhesive body (221) is T₂, Tᵢ ≥ 80 µm, and T₂ ≤ 70 µm.

## Description

### TECHNICAL FIELD

This application relates to the battery field, and in particular, to a tab assembly, a secondary battery, a battery module, and an electrical device.

### BACKGROUND

With the growing demand for faster charging speed in electronic devices, high-rate batteries are becoming increasingly prevalent, leading to higher requirements on the current-carrying capacity of tabs. Typically, the current-carrying capacity of a tab is enhanced by increasing the thickness of the tab. During packaging of a battery, a tab adhesive is hot-melted to fill the gaps around the tabs to prevent leakage. The ability of the hot-melted tab adhesive to compensate for the gaps is limited, and therefore, a thick tab needs to be matched with a thick tab adhesive to ensure the packaging reliability. Currently, the overall length of a battery that employs a thick tab adhesive is relatively large, giving rise to a relatively low energy density.

### SUMMARY

Some embodiments of this application provide a tab assembly, a secondary battery, and an electrical device, and aim to solve the problem that a tab adhesive is too thick to bend and results in a loss of the energy density of the battery.

To solve the above technical problem, a technical solution of this application is to provide a tab assembly. The tab assembly includes a tab and a tab adhesive. Along a thickness direction of the tab, the tab includes a first surface and a second surface opposite to each other. Both the first surface and the second surface are provided with the tab adhesive. The tab adhesive provided on the first surface and the tab adhesive provided on the second surface jointly wrap the tab. Along a length direction of the tab, the tab includes a first end and a second end opposite to each other. The tab adhesive includes a first layer and a second layer. The first layer and the second layer are stacked along a direction from the first end to the second end. The first layer includes a first adhesive body. The second layer includes at least one layer of a second adhesive body. A material of the second adhesive body comprises one or more selected from the group consisting of polyethylene, polypropylene and polyethylene terephthalate. A thickness of the tab is Tᵢ, and a thickness of the second adhesive body is T₂, satisfying: Tᵢ ≥ 80 µm, and T₂ ≤ 70 µm. When a tab of a thickness greater than or equal to 80 µm is used in a secondary battery, the thickness of the corresponding tab adhesive used needs to be increased to meet the packaging requirement. A resulting problem is that the tab adhesive exposed outside the packaging bag of the secondary battery is too thick to bend, resulting in a loss of the energy density of the secondary battery. In this embodiment of this application, a composite structure containing two layers of tab adhesive is employed. At least a part of the second adhesive body of the tab adhesive is located outside the packaging bag. As verified by the applicant hereof through experiments, when the material of the tab adhesive comprises one or more selected from the group consisting of polyethylene, polypropylene and polyethylene terephthalate, if the thickness T₂ of the tab adhesive is less than or equal to 70 µm, the bending performance requirement can be met, and therefore, the second adhesive body exposed outside the packaging bag can be bent, thereby preventing the problem that the energy density of the battery is reduced by a factor that the exposed part of the thick tab adhesive occupies some space in the length direction.

In one or more optional embodiments, T₂ satisfies: T₂ ≤ 60 µm. In this embodiment, the thickness of the second adhesive body exposed outside the packaging bag is further reduced, and the second adhesive body is made more bendable, thereby increasing the energy density of the secondary battery.

In one or more optional embodiments, T₂ satisfies: T₂ ≥ 40 µm. The technical solution of this application is applicable to a scenario in which the thickness Tᵢ of the tab is greater than or equal to 80 µm. Therefore, in this embodiment, when T₂ ≥ 40 µm, the second adhesive body can wrap the tab. When a sealed region of a top seal portion is offset from a preset position along a length direction of the tab due to processing errors, the following consequence occurs: when viewed along a thickness direction of the battery, the top seal portion overlaps a part of the second adhesive body in the second layer, the part being close to the top seal portion of the packaging bag. In this case, the above arrangement can achieve the following beneficial effect: the second adhesive body in the second layer wraps the tab and can play an insulating role to prevent a short circuit between the Al layer in the packaging bag and the tab. In one or more optional embodiments, a material of the first adhesive body comprises one or more selected from the group consisting of polyethylene, polypropylene and polyethylene terephthalate.

In one or more optional embodiments, the material of the first adhesive body is identical to the material of the second adhesive body. In this embodiment, when the material of the first adhesive body is identical to the material of the second adhesive body, the processing of the tab adhesive is facilitated.

In one or more optional embodiments, a thickness of the first adhesive body is T₁, and T₁ satisfies: MAX(70 µm, 70%Tᵢ) ≤ T₁ ≤ 1.5Tᵢ. In this embodiment, in order to meet the packaging performance requirement while increasing the energy density of the secondary battery, the thickness T₁ of the first adhesive body of which at least a part is located at the top seal portion of the packaging bag of the secondary battery is required to be greater than or equal to 70 µm or greater than or equal to 70%Tᵢ. When 70%Tᵢ ≤ 70 µm, T₁ needs to satisfy: T₁ ≥ 70 µm; and, when 70%Tᵢ > 70 µm, T₁ needs to satisfy: T₁ ≥ 70%Tᵢ, thereby meeting the basic packaging requirements and preventing packaging problems such as electrolyte leakage. In addition, the thickness satisfying T₁ ≤ 1.5Tᵢ can prevent an excessive dosage of the first adhesive body that causes material waste and a cost rise. Moreover, when the thickness of the first adhesive body is excessively large, the pressure required for packaging is also increased accordingly, thereby posing a risk that an excessive heat sealing pressure causes the tab to break off.

In one or more optional embodiments, MAX(70 µm, 80%Tᵢ) ≤ T₁ ≤ 1.5Tᵢ. In this embodiment, it is further defined that T₁ is greater than or equal to 70 µm or greater than or equal to 80%Tᵢ. When 80%Tᵢ ≤ 70 µm, T₁ needs to satisfy: T₁ ≥ 70 µm; and, when 80%Tᵢ > 70 µm, T₁ needs to satisfy: T₁ ≥ 80%Tᵢ, thereby further improving the packaging reliability.

In one or more optional embodiments, T₁/T₂ ≤ 2.5. In this embodiment, the thickness ratio of the first adhesive body to the second adhesive body is controlled to be less than or equal to 2.5, so as to prevent the processing difficulties caused by a large thickness difference between the first adhesive body and the second adhesive body, and to prevent the first adhesive body from overflowing after thermal deformation in a heat sealing process due to the large thickness of the first adhesive body. The overflowing first adhesive body also results in deformation of the second adhesive body exposed outside the top seal portion, thereby posing a problem of poor appearance.

In one or more optional embodiments, a height of the second layer is H₂, and a height of the tab adhesive is H, satisfying: 1 mm ≤ H₂ ≤ 1/2H. In this embodiment, if H₂ is excessively small, for example, less than 1 mm, the bendable height of the second adhesive body is relatively small, the increase in the energy density of the secondary battery is relatively small, and the benefit is low. In addition, in order to ensure that the first adhesive body can meet the packaging requirements, the height proportions of the first adhesive body and the second adhesive body in the tab adhesive are controlled to meet a specified requirement. The height of the second adhesive body is required to be less than or equal to 1/2 of the height of the tab adhesive.

According to a second aspect of this application, a tab assembly is provided. The tab assembly includes a tab and a tab adhesive. Along a thickness direction of the tab, the tab includes a first surface and a second surface opposite to each other. Both the first surface and the second surface are provided with the tab adhesive. The tab adhesive provided on the first surface and the tab adhesive provided on the second surface jointly wrap the tab. Along a length direction of the tab, the tab includes a first end and a second end opposite to each other. The tab adhesive includes a first layer and a second layer. The first layer and the second layer are stacked along a direction from the first end to the second end. The first layer includes a first adhesive body. The second layer includes at least one layer of a second adhesive body. A material of the first adhesive body is a mixture obtained by adding a plasticizer into at least one of polyethylene, polypropylene, or polyethylene terephthalate. A material of the second adhesive body is a mixture obtained by adding the plasticizer into at least one of polyethylene, polypropylene, or polyethylene terephthalate. The plasticizer comprises one or more selected from the group consisting of binary ethylene-propylene rubber, ternary ethylene propylene diene monomer rubber and poly(styrene-b-butadiene-b-styrene). A mass percent of the plasticizer in the first adhesive body is a, and a mass percent of the plasticizer in the second adhesive body is b, satisfying: a < b. A thickness of the tab is Tᵢ, a thickness of the first adhesive body is T₁, and a thickness of the second adhesive body is T₂, satisfying: Tᵢ ≥ 80 µm, MAX(70 µm, 70%Tᵢ) ≤ T₁ ≤ 1.5Tᵢ, and T₂ ≤ T₁. The plasticizer can play a role in increasing the softness and toughness of plastics. In this application, the mass percent b of the plasticizer in the second adhesive body is set to be greater than the mass percent a of the plasticizer in the first adhesive body. In this way, the material of the second adhesive body exposed outside the packaging bag is of lower hardness and higher toughness than the material of the first adhesive body, thereby making the second adhesive body meet the bending performance requirements. To meet the packaging requirements, the thickness T₁ of the first adhesive body is set to be greater than or equal to 70 µm or greater than or equal to 70%Tᵢ. When 70%Tᵢ ≤ 70 µm, T₁ needs to satisfy: T₁ ≥ 70 µm; and, when 70%Tᵢ > 70 µm, T₁ needs to satisfy: T₁ ≥ 70%Tᵢ. In addition, to prevent material waste, cost increase, and a tab break caused by an excessive heat sealing pressure, T₁ is set to be less than or equal to 1.5Tᵢ. When the second adhesive body is made of a material of a lower hardness than the first adhesive body, the thickness of the second adhesive body may be less than the thickness of the first adhesive body, or equal to the thickness of the first adhesive body.

In one or more optional embodiments, MAX(70 µm, 80%Tᵢ) ≤ T₁ ≤ 1.5Tᵢ. In this embodiment, the lower limit of the thickness T₁ of the first adhesive body. When 80%Tᵢ ≤ 70 µm, T₁ needs to satisfy: T₁ ≥ 70 µm; and, when 80%Tᵢ > 70 µm, T₁ needs to satisfy: T₁ ≥ 80%Tᵢ, thereby meeting the packaging requirements more sufficiently.

In one or more optional embodiments, T₂ satisfies: T₂ ≥ 40 µm. The technical solution of this application is applicable to a scenario in which the thickness Tᵢ of the tab is greater than or equal to 80 µm. Therefore, in this embodiment, when T₂ ≥ 40 µm, the second adhesive body can wrap the tab. When a sealed region of a top seal portion is offset from a preset position along a length direction of the tab due to processing errors, the following consequence occurs: when viewed along a thickness direction of the battery, the top seal portion overlaps a part of the second adhesive body in the second layer, the part being close to the top seal portion of the packaging bag. In this case, the above arrangement can achieve the following beneficial effect: the second adhesive body in the second layer wraps the tab and can play an insulating role to prevent a short circuit between the Al layer in the packaging bag and the tab.

In one or more optional embodiments, T₁/T₂ ≤ 2.5. In this embodiment, the thickness ratio of the first adhesive body to the second adhesive body is controlled to be less than or equal to 2.5, so as to prevent the processing difficulties caused by a large thickness difference between the first adhesive body and the second adhesive body, and to prevent the first adhesive body from overflowing after thermal deformation in a heat sealing process due to the large thickness of the first adhesive body. The overflowing first adhesive body also results in deformation of the second adhesive body exposed outside the top seal portion, thereby posing a problem of poor appearance.

In one or more optional embodiments, a height of the second layer is H₂, and a height of the tab adhesive is H, satisfying: 1 mm ≤ H₂ ≤ 1/2H. In this embodiment, if H₂ is excessively small, for example, less than 1 mm, the bendable height of the second adhesive body is relatively small, the increase in the energy density of the secondary battery is relatively small, and the benefit is low. In addition, in order to ensure that the first adhesive body can meet the packaging requirements, the height proportions of the first adhesive body and the second adhesive body in the tab adhesive are controlled to meet a specified requirement. The height of the second adhesive body is required to be less than or equal to 1/2 of the height of the tab adhesive.

In one or more optional embodiments, the second adhesive body is arranged in a stepped configuration, and the width of the second adhesive body decreases progressively along a direction away from the first layer. In this embodiment, the second adhesive body in the second layer is relatively wide at a part close to the first adhesive body in the first layer. In other words, the second adhesive body in the second layer is relatively wide at a part close to the top seal portion of the packaging bag. When a sealed region of a top seal portion is offset from a preset position along the length direction of the tab due to processing errors, the following consequence occurs: when viewed along the thickness direction of the battery, the top seal portion overlaps a part of the second adhesive body in the second layer, the part being close to the top seal portion of the packaging bag. In this case, the above design can minimize the packaging defects caused by the misalignment of the packaging position. In a direction away from the first layer, the width of the second adhesive body decreases progressively, so that the second adhesive body decreases progressively in size and is more bendable.

In one or more optional embodiments, the second layer includes a first adhesive body and a second adhesive body that are alternately stacked along the length direction of the tab. In this embodiment, a plurality of first adhesive bodies and second adhesive bodies are alternately stacked in the second layer along the length direction of the tab, thereby making the second layer bendable. Moreover, when the sealed region of the top seal portion is offset from the preset position along the length direction of the tab due to processing errors, the top seal portion partially overlaps the second layer when viewed along the thickness direction of the battery. In this case, the above arrangement can achieve the following beneficial effect: a part of the second layer that overlaps the top seal portion is still the first adhesive body and can still play a good sealing role, thereby reducing the packaging defects caused by misalignment, and improving the yield rate of the battery.

According to a third aspect of this application, a secondary battery is provided. The secondary battery includes: a packaging bag, a cell body, and the tab assembly disclosed above. The packaging bag includes a main portion and a top seal portion; the top seal portion is connected to the main portion; the top seal portion includes a sealed region; the cell body is accommodated in the main portion; the first end is electrically connected to the cell body; the second end passes through the sealed region and extends out of the packaging bag; at least a part of the first layer is disposed on the top seal portion; and at least a part of the second adhesive body in the second layer protrudes out of the packaging bag.

In one or more optional embodiments, along the length direction of the tab, a width of the sealed region is Wt₂, and a height of the first layer is H₁, satisfying: H₁ ≥ Wt₂ + 1 mm. In this embodiment, the dimensions satisfy H₁ ≥ Wt₂ + 1 mm, thereby meeting the packaging requirements.

According to a fourth aspect of this application, a battery module is provided. The battery module includes a circuit board and the secondary battery disclosed above. A part, located outside the packaging bag and wrapped with the second adhesive body, of the tab is referred to as a bend portion, and the bend portion and the second adhesive body that wraps the bend portion are bent together along a direction from the second end to the first end.

According to a fifth aspect of this application, an electrical device is provided. The electrical device includes the battery module disclosed above.

The beneficial effects of some embodiments of this application are: The second adhesive body exposed outside the packaging bag of the secondary battery in the composite tab adhesive is arranged to meet the bending performance requirements. In this way, the second adhesive body is easily bendable along the thickness direction of the tab, thereby reducing the overall length of the battery and increasing the energy density of the battery.

### BRIEF DESCRIPTION OF DRAWINGS

To describe the technical solutions in the specific embodiments of this application or the prior art more clearly, the following outlines the drawings that need to be used in the descriptions of the specific embodiments of this application or the prior art. In all the drawings, similar elements or parts are generally identified by similar reference numerals. The elements or parts in the drawings are not necessarily drawn to scale.
FIG. 1 is a cross-sectional schematic view of a secondary battery sectioned along a direction perpendicular to a width direction, with a conventional tab assembly used in a battery module;
FIG. 2 is a cross-sectional schematic view of a secondary battery sectioned along a direction perpendicular to a width direction, with a battery module that employs a tab assembly provided in an embodiment of this application;
FIG. 3 is a schematic diagram of a tab assembly viewed along a length direction of a tab according to an embodiment of this application;
FIG. 4 is a schematic diagram of the tab assembly shown in FIG. 3 viewed along a thickness direction of the tab;
FIG. 5 is a cross-sectional view of the tab assembly shown in FIG. 3 sectioned along an A-A line;
FIG. 6 is a schematic diagram of another tab assembly viewed along a length direction of a tab according to an embodiment of this application;
FIG. 7 is a schematic diagram of the tab assembly shown in FIG. 6 viewed along a thickness direction of the tab;
FIG. 8 is a cross-sectional view of the tab assembly shown in FIG. 6 sectioned along a B-B line;
FIG. 9 is a schematic diagram of still another tab assembly viewed along a length direction of a tab according to an embodiment of this application;
FIG. 10 is a schematic diagram of the tab assembly shown in FIG. 9 viewed along a thickness direction of the tab;
FIG. 11 is a cross-sectional view of the tab assembly shown in FIG. 9 sectioned along a C-C line;
FIG. 12 is a schematic diagram of yet another tab assembly viewed along a length direction of a tab according to an embodiment of this application;
FIG. 13 is a schematic diagram of the tab assembly shown in FIG. 12 viewed along a thickness direction of the tab;
FIG. 14 is a cross-sectional view of the tab assembly shown in FIG. 12 sectioned along a D-D line;
FIG. 15 is a cross-sectional schematic view of the tab assembly shown in FIG. 9 packaged in a secondary battery;
FIG. 16 is a cross-sectional schematic view of a tab assembly packaged in a secondary battery according to a second embodiment of this application; and
FIG. 17 is a schematic diagram of a secondary battery viewed along a thickness direction of the secondary battery according to an embodiment of this application.

### DETAILED DESCRIPTION

For ease of understanding this application, the following describes this application in more detail with reference to drawings and specific embodiments. It is hereby noted that an element referred to herein as being "fixed to" another element may be directly disposed on the other element, or may be fixed to the other element with one or more elements in between. An element referred to herein as "connected to" another element may be connected to the other element directly or with one or more elements in between. The terms "vertical", "horizontal", "left", "right", and other similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

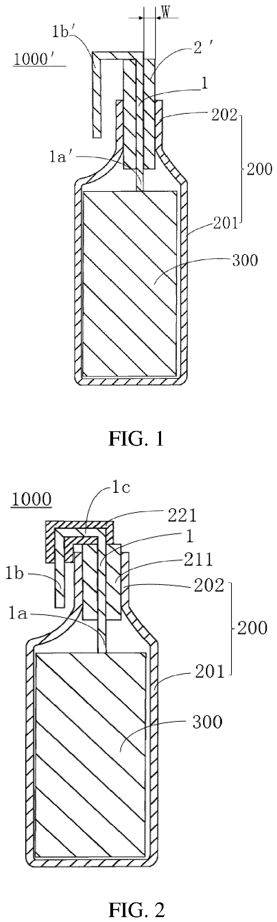

Referring to FIG. 1, the battery module includes a circuit board (not shown in the drawing) and a secondary battery. Currently, a high-rate secondary battery 1000' typically employs a tab 1 of 80 µm or even 100 µm in thickness. The tab 1 needs to be matched with a thick tab adhesive 2' of at least 80 µm in thickness to prevent leakage of the high-rate battery 1000' caused by the tab adhesive 2' failing to effectively fill the gap between the thick tab 1 and the top seal portion 202 during packaging. Currently, a tab assembly of the high-rate battery 1000' includes the tab 1 and the thick tab adhesive 2'. A first end 1a' of the tab 1 is connected to a cell body 300 of the battery 1000' in a packaging bag of the battery. A second end 1b' of the tab 1 passes through a sealed region of a top seal portion 202 of the battery 1000' and then extends out of the packaging bag. During packaging of the battery 1000', two layers of thick tab adhesive 2' are applied onto two opposite surfaces of the tab 1 respectively. After being processed, the two layers of thick tab adhesive 2' are hot-melted and bonded together with the top seal portion 202. The thick tab adhesive 2' fills the gap between the tab 1 and the top seal portion 202. The thick tab adhesive 2' extends out of the packaging bag and is attached, outside the packaging bag, to the outer surface of the tab 1 that extends out of the packaging bag. Due to a relatively large thickness, the thick tab adhesive 2' is of high hardness and poor flexibility. Consequently, the exposed part of the thick tab adhesive 2' is not bendable together with the tab 1. The exposed part of the thick tab adhesive 2' occupies a relatively large head space of the secondary battery 1000', thereby resulting in a decline in the energy density of the secondary battery 1000'.

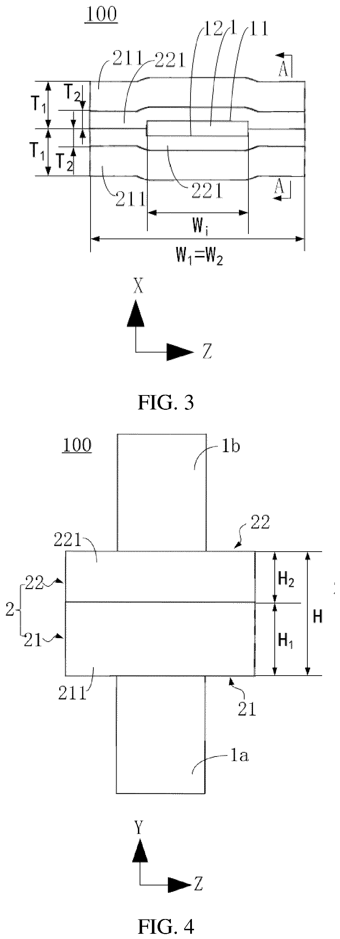

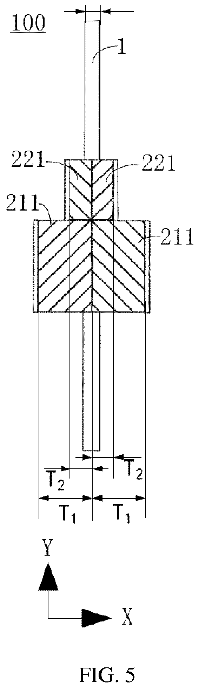

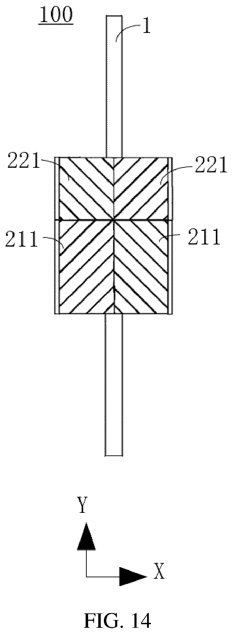

In view of the above situation, referring to FIG. 3 to FIG. 5 and FIG. 12 to FIG. 14, this application provides a tab assembly 100, including a tab 1 and a tab adhesive 2. Along a thickness direction X of the tab 1, the tab 1 includes a first surface 11 and a second surface 12 opposite to each other. Both the first surface 11 and the second surface 12 are provided with the tab adhesive 2. The tab adhesive 2 provided on the first surface 11 and the tab adhesive 2 provided on the second surface 12 jointly wrap the tab 1. Along a length direction Y of the tab 1, the tab 1 includes a first end 1a and a second end 1b opposite to each other. The tab adhesive 2 includes a first layer 21 and a second layer 22. The first layer 21 and the second layer 22 are stacked along a direction from the first end 1a to the second end 1b. The first layer 21 includes a first adhesive body 211. The second layer 22 includes at least one layer of a second adhesive body 221. By making the second adhesive body 221 relatively thin and/or by increasing the proportion of a plasticizer in the second adhesive body 221, this application makes the second adhesive body 221 more bendable than the first adhesive body 211 while the first adhesive body 211 meets the packaging requirements. In this way, the second layer 22 can be bent together with the tab 1 in the battery module, thereby reducing the head space that the tab assembly 100 needs to occupy in the battery, and increasing the energy density of the battery.

In this application, the thickness direction X of the tab 1, the length direction Y of the tab 1, and the width direction Z of the tab 1 are perpendicular to each other.

### Embodiment 1

Referring to FIG. 3 to FIG. 5, a tab assembly includes a tab 1 and a tab adhesive 2. Along a thickness direction of the tab 1, the tab 1 includes a first surface 11 and a second surface 12 opposite to each other. Both the first surface 11 and the second surface 12 are provided with the tab adhesive 2. The tab adhesive 2 provided on the first surface 11 and the tab adhesive 2 provided on the second surface 12 jointly wrap the tab 1. Along a length direction of the tab 1, the tab 1 includes a first end 1a and a second end 1b opposite to each other.

In some embodiments, the tab adhesive 2 includes a first layer 21 and a second layer 22. The first layer 21 and the second layer 22 are stacked along a direction from the first end 1a to the second end 1b. The first layer 21 includes a first adhesive body 211. The second layer 22 includes at least one layer of a second adhesive body 221.

In some embodiments, the material of the second adhesive body 221 comprises one or more selected from the group consisting of polyethylene, polypropylene and polyethylene terephthalate.

In some embodiments, the thickness of the tab 1 is Tᵢ, satisfying: Tᵢ ≥ 80 µm. The thickness Tᵢ of the tab 1 is set to be greater than or equal to 80 µm, so as to meet the requirements on the performance and safety of the battery cell during high-rate discharge and to prolong the service life of the battery cell.

Referring to FIG. 2 to FIG. 5, in some embodiments, the thickness of the second adhesive body 221 is T₂, satisfying: T₂ ≤ 70 µm. In this application, a composite structure containing two layers of tab adhesive 2 is employed. At least a part of the second adhesive body 221 of the tab adhesive is located outside the packaging bag 200. As verified by the applicant hereof through experiments, when the material of the tab adhesive 2 comprises one or more selected from the group consisting of polyethylene, polypropylene and polyethylene terephthalate, if the thickness T₂ of the tab adhesive is less than or equal to 70 µm, the bending performance requirement can be met, and therefore, the second adhesive body 221 exposed outside the packaging bag 200 can be bent, thereby preventing the problem that the energy density of the battery is reduced by a factor that the exposed part of the thick tab adhesive occupies some space in the length direction.

In some embodiments, T₂ ≤ 60 µm. The smaller the thickness of the second adhesive body 221, the lower the probability of fracture of the tab assembly 100 during bending, and the lower the probability of rebound of the bend part of the bent tab assembly 100. By further reducing the thickness of the second adhesive body 221 exposed outside the packaging bag, this application makes the second adhesive body more bendable, thereby increasing the energy density of the secondary battery.

In some embodiments, T2 ≥ 40µm. The technical solution of this application is applicable to a scenario in which the thickness Tᵢ of the tab 1 is greater than or equal to 80 µm. Therefore, when T₂ ≥ 40 µm, the second adhesive body 221 can wrap the tab 1. When a sealed region 2022 of a top seal portion 202 is offset from a preset position along a length direction of the tab 1 due to processing errors, the following consequence occurs: when viewed along the thickness direction of the battery, the top seal portion 202 overlaps a part of the second adhesive body 221 in the second layer 22, the part being close to the top seal portion 202 of the packaging bag 200. In this case, the second adhesive body 221 in the second layer 22 wraps the tab 1, and can play an insulating role to prevent a short circuit between the Al layer in the packaging bag 200 and the tab 1.

In some embodiments, the material of the first adhesive body 211 comprises one or more selected from the group consisting of polyethylene, polypropylene and polyethylene terephthalate.

In some embodiments, the material of the first adhesive body 211 is identical to the material of the second adhesive body 221. For example, both the first adhesive body 211 and the second adhesive body 221 are made of polypropylene. The material of the first adhesive body 211 being identical to the material of the second adhesive body 221 can facilitate the processing of the tab adhesive 2.

In some embodiments, the thickness of the first adhesive body is T₁, satisfying: MAX(70 µm, 70%Tᵢ) ≤ T₁ ≤ 1.5Tᵢ. In order to meet the packaging performance requirement while increasing the energy density of the secondary battery, the thickness T₁ of the first adhesive body 211 of which at least a part is located at the top seal portion 202 of the packaging bag 200 of the secondary battery is required to be greater than or equal to 70 µm and also greater than or equal to 70%Tᵢ, thereby meeting the basic packaging requirements and preventing packaging problems such as electrolyte leakage. In addition, the thickness satisfying T₁ ≤ 1.5Tᵢ can prevent an excessive dosage of the first adhesive body 211 that causes material waste and a cost rise, and prevent a tab break caused by a large packaging pressure required due to an excessive thickness of the first adhesive body 211.

Further, in some embodiments, MAX(70 µm, 80%Tᵢ) ≤ T₁ ≤ 1.5Tᵢ. It is further defined that T₁ is greater than or equal to 70 µm and T₁ is greater than or equal to 80%Tᵢ, thereby further improving the packaging reliability.

In some embodiments, T₁/T₂ ≤ 2.5. The thickness ratio of the first adhesive body 211 to the second adhesive body 221 is controlled to be less than or equal to 2.5, so as to prevent the processing difficulties caused by a large thickness difference between the first adhesive body 211 and the second adhesive body 221, and to prevent the first adhesive body 211 from overflowing after thermal deformation in a heat sealing process due to the large thickness of the first adhesive body 211. The overflowing first adhesive body 211 also results in deformation of the second adhesive body 221 exposed outside the top seal portion 202, thereby posing a problem of poor appearance.

In some embodiments, the width of the tab is Wᵢ, the width of the first adhesive body is W₁, and the width of the second adhesive body is W₂, satisfying: Wᵢ + 1 mm ≤ W₂ = W₁. In contrast to a technical solution in which the width of the first adhesive body 211 is different from the width of the second adhesive body 221, the technical solution that makes the width W₁ of the first adhesive body 211 equal to the width W₂ of the second adhesive body 221 can facilitate processing of the tab assembly 100. By setting the width of the second adhesive body 221 to be greater than or equal to a sum of the width Wᵢ of the tab 1 and one millimeter, this application achieves a sufficient length of both the first adhesive body 211 and the second adhesive body 221 along the width direction Z of the tab, so as to meet the requirement of connection between the tab adhesives 2 located on the two opposite surfaces of the tab 1. In this way, the tab adhesives 2 located on the two surfaces can jointly wrap the tab 1, and, during packaging, an enough amount of tab adhesive 2 is available on both sides of the tab 1 along the width direction Z of the tab 1 to fill the gap between the tab 1 and the top seal portion 202.

In some embodiments, the height of the second layer 22 is H₂, and the height of the tab adhesive 2 is H, satisfying: 1 mm ≤ H₂ ≤ 1/2H. If H₂ is excessively small, for example, less than 1 mm, the bendable height of the second adhesive body 221 is relatively small, the increase in the energy density of the secondary battery is relatively small, and the benefit is low. In addition, in order to ensure that the first adhesive body 211 can meet the packaging requirements, the height proportions of the first adhesive body 211 and the second adhesive body 221 in the tab adhesive 2 are controlled to meet a specified requirement. The height of the second adhesive body 221 is required to be less than or equal to 1/2 of the height of the tab adhesive 2.

In some embodiments, the shape of the second adhesive body 221 may be set according to actual use requirements, so that the second adhesive body 221 exposed outside the top seal portion 202 of the battery matches the mounting environment of the battery or meets the aesthetic requirements.

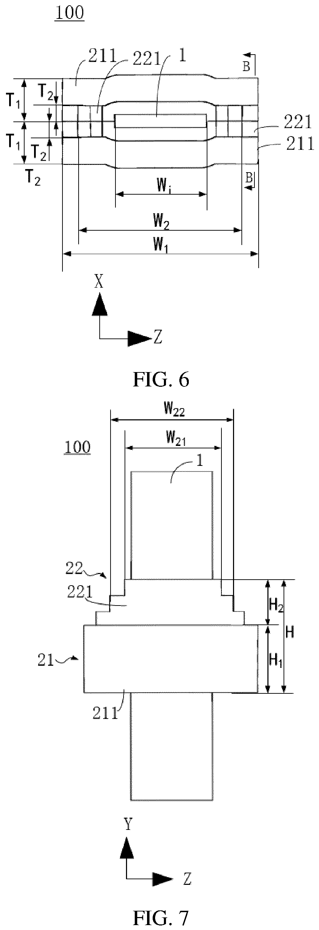

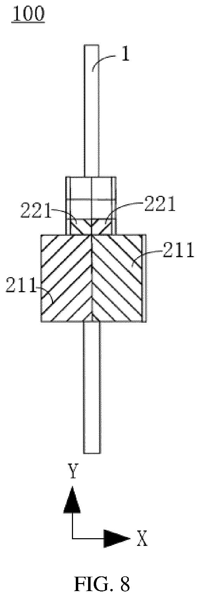

Referring to FIG. 6 to FIG. 8 and FIG. 17, in some embodiments, the second adhesive body 221 is arranged in a stepped configuration, and the width of the second adhesive body 221 in the second layer 22 decreases progressively along a direction away from the first layer 21. The second adhesive body 221 in the second layer 22 is relatively wide at a part close to the first adhesive body 211 in the first layer 21. In other words, the second adhesive body 221 is relatively wide at a part close to the top seal portion 202 of the packaging bag 200. When a sealed region 2022 of a top seal portion 202 is offset from a preset position along the length direction of the tab due to processing errors, the following consequence occurs: when viewed along the thickness direction of the battery, the top seal portion 202 overlaps a part of the second adhesive body 221, the part being close to the top seal portion 202 of the packaging bag 200. In this case, the above design can minimize the packaging defects caused by the misalignment of the packaging position. In a direction away from the first layer 21, the width of the second adhesive body 221 decreases progressively, so that the second adhesive body 221 decreases progressively in size and is more bendable.

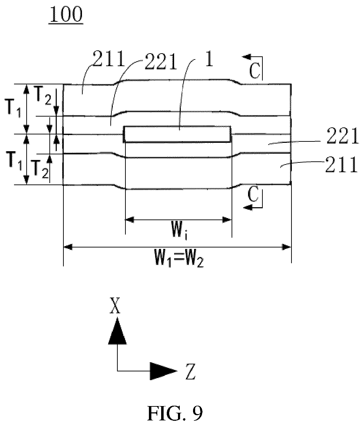

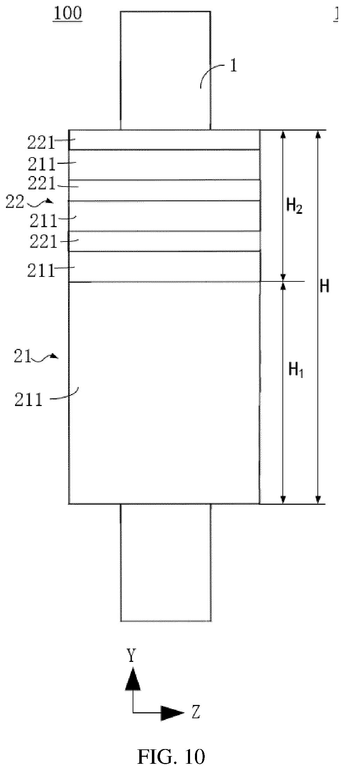

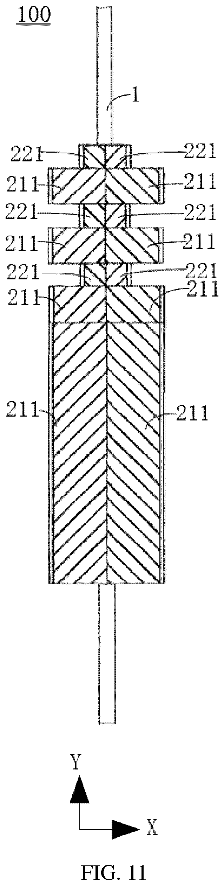

Referring to FIG. 9 to FIG. 11 and FIG. 17, in some embodiments, the second layer 22 includes a plurality of first adhesive bodies 211 and second adhesive bodies 221 alternately stacked along the length direction Y of the tab 1. A plurality of first adhesive bodies 211 and second adhesive bodies 221 are alternately stacked in the second layer 22 along the length direction Y of the tab 1, thereby making the second layer 22 bendable. Moreover, when the sealed region 2022 of the top seal portion 202 is offset from the preset position along the length direction Y of the tab 1 due to processing errors, the top seal portion 202 partially overlaps the second layer 22 when viewed along the thickness direction of the battery. In this case, the above arrangement achieves the following beneficial effect: a part of the second layer 22 that overlaps the top seal portion 202 is still the first adhesive body 211 and can still play a good sealing role, thereby reducing the packaging defects caused by misalignment, and improving the yield rate of the battery.

### Embodiment 2

This embodiment differs from the tab 1 assembly 100 in Embodiment 1 in that: the material of the first adhesive body 211 is a mixture obtained by adding a plasticizer into at least one of polyethylene, polypropylene, or polyethylene terephthalate; the material of the second adhesive body 221 is a mixture obtained by adding the plasticizer into at least one of polyethylene, polypropylene, or polyethylene terephthalate; the plasticizer comprises one or more selected from the group consisting of binary ethylene-propylene rubber, ternary ethylene propylene diene monomer rubber and poly(styrene-b-butadiene-b-styrene); and a mass percent of the plasticizer in the first adhesive body is a, and a mass percent of the plasticizer in the second adhesive body is b, satisfying: a < b, and T₂ ≤ T₁. The plasticizer can play a role in increasing the softness and toughness of plastics. In this application, the mass percent b of the plasticizer in the second adhesive body 221 is set to be greater than the mass percent a of the plasticizer in the first adhesive body 211. In this way, the material of the second adhesive body 221 exposed outside the packaging bag 200 is of lower hardness and higher toughness than the material of the first adhesive body 211, thereby making the second adhesive body 221 meet the bending performance requirements.

In some embodiments, to meet the packaging requirements, the thickness T₁ of the first adhesive body 211 is set to be greater than or equal to 70 µm and greater than or equal to 70%Tᵢ. In addition, to prevent material waste, cost increase, and a tab break caused by an excessive packaging pressure required due to an excessive thickness of the first adhesive body 211, T₁ is set to be less than or equal to 1.5Tᵢ.

It is worth noting that when the second adhesive body 221 is made of a material of a lower hardness than the first adhesive body 211, the thickness of the second adhesive body 221 may be less than the thickness of the first adhesive body 211, or equal to the thickness of the first adhesive body 211.

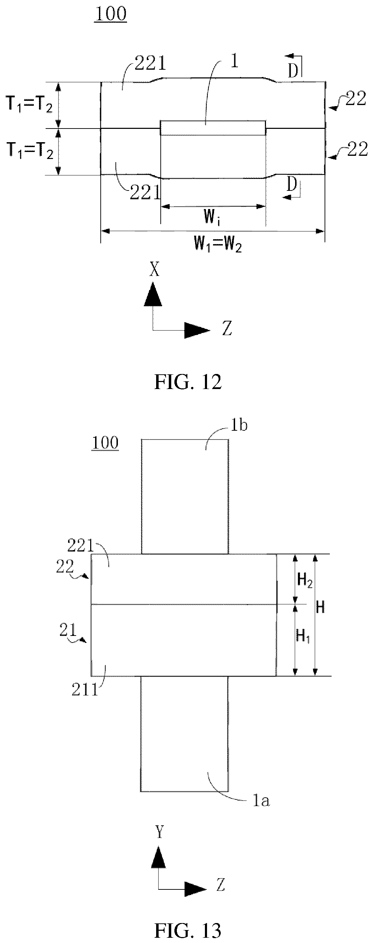

Referring to FIG. 12 to FIG. 14, in some embodiments, the first adhesive body 211 and the second adhesive body 221 of the tab assembly 100 are of the same thickness and width.

Understandably, the specified value ranges of T₁, T₂, W₁, W₂, H₂, and H₁ in Embodiment 1 are applicable to this embodiment.

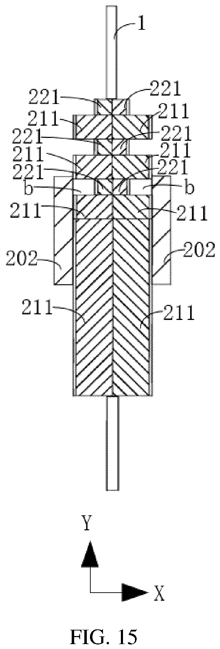

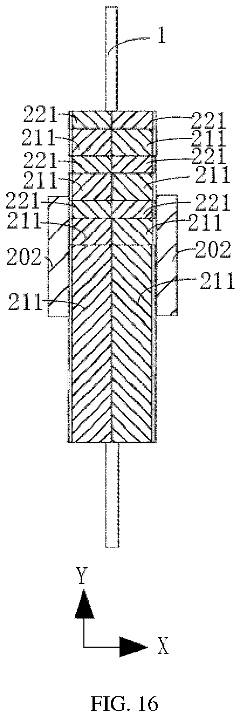

Referring to FIG. 9 to FIG. 17 for the top seal portion, in some embodiments, the first adhesive body 211 and the second adhesive body 221 of the tab assembly 100 are of the same thickness and width. In contrast to the embodiments shown in FIG. 9 to FIG. 11, because the first adhesive body 211 and the second adhesive body 221 are of the same thickness and width, even if the tab assembly 100 is offset during packaging and the offset results in partial overlap between the second layer 22 and the top seal portion 202 along the thickness direction of the battery, the second adhesive body 221 located in the second layer 22 can still fill a gap b formed due to the small thickness of the second adhesive body 221 as shown in the embodiment in FIG. 15, thereby playing a more effective role in filling the gap between the top seal portion 202 and the tab 1.

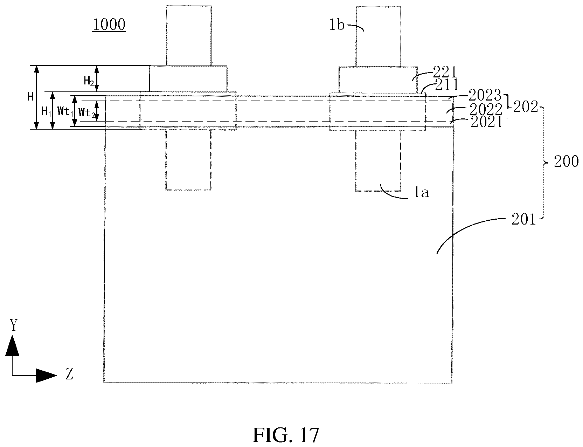

Referring to FIG. 17, based on the same inventive concept, this application further provides a secondary battery 1000, including: a packaging bag 200, a cell body 300, and the tab assembly 100 disclosed in any one of the above embodiments. The packaging bag 200 includes a main portion 201 and a top seal portion 202. The top seal portion 202 is connected to the main portion 201. The top seal portion includes a sealed region 2022. The cell body 300 is accommodated in the main portion 201. The first end 1a is electrically connected to the cell body 300. The second end 1b passes through the sealed region 2022 and extends out of the packaging bag 200. At least a part of the first layer 21 is disposed on the top seal portion 202. At least a part of the second adhesive body 221 in the second layer 22 protrudes out of the packaging bag 200.

The first end 1a is electrically connected to the cell body 300, and the second end 1b passes through the sealed region 2022 and protrudes out of the packaging bag 200. The first layer 21 and the second layer 22 of the tab adhesive 2 are stacked along the direction from the first end 1a to the second end 1b, and at least a part of the first layer 21 is disposed at the top seal portion 202, thereby meeting the packaging requirements. Viewed along the thickness direction of the secondary battery 1000, the region at which the top seal portion 202 is located includes an inner unsealed region 2021, a sealed region 2022, and an outer unsealed region 2023 that are sequentially connected along the length direction of the secondary battery 1000. In the sealed region 2022, a surface of an upper-layer packaging film and a surface of a lower-layer packaging film of the packaging bag 200 are bonded together, where the two surfaces are oriented toward each other. In the inner unsealed region 2021 and the outer unsealed region 2023, the surface of the upper-layer packaging film and the surface of the lower-layer packaging film of the packaging bag 200 are not bonded together, where the two surfaces are oriented toward each other.

In some embodiments, the width of the sealed region 2022 is Wt₂, and the height of the first layer is H₁. H₁ satisfies: H₁ ≥ Wt₂ + 1 mm. The first adhesive body 211 possesses a sufficient height to facilitate alignment during the packaging. In this way, at the two ends of the first adhesive body 211 respectively, the first adhesive body 211 can protrude from the two sides of the sealed region 2022 along the length direction of the battery, so as to meet the packaging requirements.

Referring to FIG. 2, this application further provides a battery module. The battery module includes a circuit board (not shown in the drawing) and the secondary battery disclosed in any one of the above embodiments. In the battery module, a part, located outside the packaging bag 200 and wrapped with the second adhesive body 221, of the tab 1 is referred to as a bend portion 1c, and the bend portion 1c and the second adhesive body 221 that wraps the bend portion 1c are bent together along a direction from the second end 1b to the first end 1a.

Because the bend portion 1c and the second adhesive body 221 that wraps the bend portion 1c are bent together along the direction from the second end 1b to the first end 1a, the length of the secondary battery 1000 is reduced, and the energy density of the secondary battery 1000 is increased.

Based on the same inventive concept, this application further provides an electrical device. The electrical device includes the battery module disclosed in the above embodiment.

The implementations of this application are described below in more detail with reference to embodiments and comparative embodiments.

### Preparing a tab assembly

The preparation method of the tab assembly 100 is: Bonding two tab adhesive sheets of the same thickness as T₁ to the first surface 11 and the second surface 12 of the tab 1 respectively; heating the two tab adhesive sheets into a viscoelastic state; pressing the two heated viscoelastic tab adhesive sheets into shape by using a step-shaped mold on two sides of the tab 1 respectively so that the excess viscoelastic tab adhesive is squeezed out after being pressed; and then, after the tab adhesive sheets cool down, cutting away the squeezed-out tab adhesive to obtain a tab assembly 100. The molds of different sizes may be selected according to the required sizes of the first adhesive body 211 and the second adhesive body 221.

An alternative method for preparing the tab assembly 100 is: Adding a step of trimming the tab adhesive 2 after the conventional steps of preparing a tab assembly, and obtaining the tab assembly 100 of this application by trimming. The amount trimmed off varies depending on the required sizes of the first adhesive body 211 and the second adhesive body 221.

### Preparing a positive electrode plate

Mixing lithium cobalt oxide as a positive active material, acetylene black as a conductive agent, and polyvinylidene difluoride as a binder at a mass ratio of 94: 3: 3, and adding N-methyl-pyrrolidone as a solvent to form a slurry in which the solid content is 75%, and stirring well. Coating the surfaces of a 12 µm-thick aluminum foil evenly with the slurry on both sides, drying the slurry at a temperature of 90 °C, and cold-pressing the foil to obtain a positive electrode plate coated with a 100 µm-thick positive active material layer. Cutting the positive electrode plate into the desired size, and welding an aluminum tab 1 to the electrode plate for future use.

### Preparing a negative electrode plate

Mixing artificial graphite as a negative active material and styrenebutadiene rubber as a binder at a mass ratio of 98: 2, and adding deionized water as a solvent to form a slurry in which the solid content is 70%, and stirring well. Coating the surfaces of an 8 µm-thick copper foil evenly with the slurry on both sides, drying the slurry at 110 °C, and cold-pressing the foil to obtain a negative electrode plate coated with a 150 µm-thick negative active material layer. Cutting the negative electrode plate into the desired size, and welding a nickel tab 1 to the electrode plate for future use.

### Preparing a separator

Mixing aluminum oxide and a polyacrylate ester at a mass ratio of 90: 10, and dissolving the mixture in deionized water to form a ceramic slurry in which the solid content is 50%. Subsequently, coating one side of a porous substrate (polyethylene, thickness: 7 µm; average pore diameter: 0.073 µm; porosity: 26%) with the ceramic slurry evenly by a micro-gravure coating method. Drying the slurry to obtain a double-layer structure that includes a ceramic coating and a porous substrate. The thickness of the ceramic coating is 2.5 µm.

Mixing polyvinylidene difluoride and polyacrylate at a mass ratio of 96: 4, and dissolving the mixture in deionized water to form a polymer slurry with a solid content of 50%. Subsequently, coating both surfaces of the double-layer structure of the ceramic coating and the porous substrate with the polymer slurry evenly by a micro-gravure coating method, and drying the slurry to obtain a separator, in which the thickness of a single coating layer formed by the polymer slurry is 2 µm.

### Preparing an electrolyte solution

Mixing ethylene carbonate (EC), diethyl carbonate (DEC), propylene carbonate (PC), propyl propionate (PP), and vinylene carbonate (VC) at a mass ratio of 20: 30: 20: 28: 2 in an environment with a moisture content less than 10 ppm, so as to obtain a nonaqueous organic solution. Adding lithium hexafluorophosphate (LiPF₆) into the nonaqueous organic solvent to dissolve, and stirring well to obtain an electrolyte solution. The mass ratio between LiPF₆ and the nonaqueous organic solvent is 8: 92.

A method for manufacturing a secondary battery includes the following steps:

Step (1): Stacking the above-prepared positive electrode plate, separator, and negative electrode plate in sequence in such a way that the separator is located between the positive electrode plate and the negative electrode plate to serve a function of separation, and then alternately stacking minimum units of the positive electrode plate, minimum units of the separator, and minimum units of the negative electrode plate to obtain a cell body 300;

### Step (2): Punching a packaging film to form a recess; and

Step (3): Placing the cell body 300 into the recess, and sealing the recess with another packaging film, and then performing top-and-side sealing, marking the product information through inkjet coding, vacuum drying, injecting the prepared electrolyte solution, performing chemical formation and degassing, and then sealing the remaining injection port through hot-pressing, so as to obtain a secondary battery.

The differences between the comparative embodiment, Embodiment 1, Embodiment 2, Embodiments 3-1 to 3-4, Embodiments 4-1 to 4-5, and Embodiments 5-1 to 5-2 are recorded in Table 1. The remaining preparation methods and specifications are the same. The width Wt₁ of the top seal portion 202 of the secondary battery is 2.5 mm, and the width Wt₂ of the sealed region 2022 is 1.7 mm.

The secondary batteries prepared in the comparative embodiment, Embodiment 1, Embodiment 2, Embodiments 3-1 to 3-4, Embodiments 4-1 to 4-5, and Embodiments 5-1 to 5-2 are tested to evaluate the volumetric energy density, the bending defect rate of the tab assembly, the packaging defect rate of the secondary battery, and the tab break rate, and the test results are recorded in Table 1 below.

The test methods of the volumetric energy density, the bending defect rate of the tab assembly, the packaging defect rate of the secondary battery, and the tab break rate are described below.

### Method for testing the volumetric energy density

Putting the secondary battery into a 25 °C±2 °C thermostat, and leaving the battery to stand for 30 minutes so that the temperature of the secondary battery is constant. Charging the constant-temperature secondary battery at a constant current of 0.5C until a full-charge voltage, and then charging the battery at a constant voltage of the full-charge voltage until the current drops to 0.05C. Subsequently, discharging the battery at a current of 0.2C until the voltage drops to 3.0 V, and recording the discharge energy.

Volumetric energy density = discharge energy/(length of secondary battery × width of secondary battery × thickness of secondary battery).

Percentage of increase in volumetric energy density = [(volumetric energy density of the secondary battery in each embodiment - volumetric energy density of the secondary battery in the comparative embodiment)/volumetric energy density of the secondary battery in the comparative embodiment] × 100%.

### Method for bending the tab assembly

Bending a part of the tab assembly by using a tab bending machine, where the part is exposed outside the packaging bag and is formed of two layers of second adhesive body and the tab assembly located between the two layers of second adhesive body.

### Method for obtaining the bending defect rate of the tab assembly

Bending the tab assembly 180 degrees by the above method, and leaving the bent tab assembly to stand for 5 seconds. If the rebound angle is less than or equal to 30 degrees, determining that the tab assembly is qualified. If the rebound angle is greater than 30 degrees, determining that the tab assembly is unqualified. Bending defect rate of the tab assembly = (number of unqualified tab assemblies/total number of tab assemblies) × 100%.

### Method for obtaining the packaging defect rate of the secondary battery

Packaging defect rate of the secondary battery = (number of unqualified secondary batteries/total number of secondary batteries) × 100%. Method for determining an unqualified secondary battery:

Observing whether an electrolyte leakage occurs at the edge of the top seal portion. If a leakage occurs, determining that the secondary battery is unqualified.

### Method for obtaining the tab break rate

Applying a tab assembly test piece to a secondary battery, and performing a hot-press packaging process. Folding the tab after completion of packaging, and then disassembling the secondary battery and taking out the tab assembly. Observing the hot-pressing position of the tab assembly by using X-ray imaging. If the width of a crack on the tab exceeds 30% of the tab width, determining that a tab break occurs (when the crack exceeds 30% of the tab width, the flow capacity of the tab is greatly impaired and unsuitable for conducting electricity in the secondary battery).

Tab break rate = (number of tab assemblies with broken tabs/total number of tab assemblies) × 100%.

**Table 1**

| | Tᵢ (µm) | T₁ (µm) | T₂ (µm) | H₁ (mm) | H₂ (mm) | H (mm) | Tab outside packaging bag bendable | Bending defect rate of tab assembly | Packaging defect rate of secondary battery | Tab break rate | Percentage of increase in volumetric energy density (based on a secondary battery length 60 mm) |
|---|---|---|---|---|---|---|---|---|---|---|---|
| Comparative embodiment | 80 | 80 | 75 | 2.7 | 1.8 | 4.5 | No | / | 1% | 0% | 0% |
| Embodiment 1 | 80 | 80 | 70 | 2.7 | 1.8 | 4.5 | Yes | 3% | 1% | 0% | 3% |
| Embodiment 2 | 80 | 80 | 60 | 2.7 | 1.8 | 4.5 | Yes | 1% | 1% | 0% | 3% |
| Embodiment 3-1 | 80 | 60 | 70 | 2.7 | 1.8 | 4.5 | Yes | 3% | 5% | 0% | 3% |
| Embodiment 3-2 | 80 | 70 | 70 | 2.7 | 1.8 | 4.5 | Yes | 3% | 3% | 0% | 3% |
| Embodiment 3-3 | 80 | 120 | 70 | 2.7 | 1.8 | 4.5 | Yes | 3% | 0% | 5% | 3% |
| Embodiment 3-4 | 80 | 130 | 70 | 2.7 | 1.8 | 4.5 | Yes | 3% | 0% | 15% | 3% |
| Embodiment 4-1 | 110 | 70 | 70 | 2.7 | 1.8 | 4.5 | Yes | 3% | 5% | 0% | 3% |
| Embodiment 4-2 | 110 | 80 | 70 | 2.7 | 1.8 | 4.5 | Yes | 3% | 3% | 0% | 3% |
| Embodiment 4-3 | 110 | 90 | 70 | 2.7 | 1.8 | 4.5 | Yes | 3% | 1% | 0% | 3% |
| Embodiment 4-4 | 110 | 165 | 70 | 2.7 | 1.8 | 4.5 | Yes | 3% | 0% | 4% | 3% |
| Embodiment 4-5 | 110 | 180 | 70 | 2.7 | 1.8 | 4.5 | Yes | 3% | 0% | 18% | 3% |
| Embodiment 5-1 | 80 | 80 | 70 | 3.7 | 0.8 | 4.5 | Yes | 3% | 0% | 0% | 1.3% |
| Embodiment 5-2 | 80 | 80 | 70 | 2 | 2.5 | 4.5 | Yes | 3% | 5% | 0% | 5% |

As can be seen from the comparative embodiment versus Embodiment 1, when T₂ is greater than 70 µm, the tab assembly is not bendable; and when T₂ satisfies: T₂ ≤ 70 µm, the tab assembly is bendable. The bending defect rate of the tab assembly is relatively low. After the tab assembly is bent, the energy density of the secondary battery can be increased. As can be seen from Embodiment 1 versus Embodiment 2, when T₂ satisfies: T₂ ≤ 60 µm, the bending defect rate of the tab assembly is further reduced in contrast to the embodiment in which T₂ satisfies 60 µm < T₂ ≤ 70 µm.

As can be seen from Embodiments 3-1 to 3-4 versus Embodiments 4-1 to 4-5, when T₁ satisfies: 1.5Tᵢ ≥ T₁ ≥ MAX(70 µm, 70%Tᵢ), the packaging defect rate of the tab assembly during packaging is relatively low; when T₁ is greater than 1.5Tᵢ, the thickness of the first adhesive body is excessive, and the pressure required for hot-pressing during packaging increases, thereby being prone to cause the tab to break during packaging, and in turn, increasing the packaging defect rate of the secondary battery; and, when T₁ is less than 70 µm, the thickness of the first adhesive body fails to meet the requirements of filling the gap between the tab and the sealed region of the top seal portion. Consequently, the electrolyte solution in the packaging bag of the secondary battery is prone to leak, thereby increasing the packaging defect rate of the secondary battery. Further, as can be seen from Embodiment 4-2 versus Embodiment 4-3, when T₁ further satisfies: 1.5Tᵢ ≥ T₁ ≥ MAX(70 µm, 80%Tᵢ), the packaging defect rate of the tab assembly during packaging is further reduced.

As can be seen from Embodiments 1, 5-1, and 5-2, when H remains unchanged, the larger the value of H₂, the smaller the value of H₁, resulting in an increase in the packaging defect rate of the secondary battery. Because a larger value of H₂ leads to a greater height of the exposed and bendable part of the second adhesive body of the tab assembly, the bendable length of the tab assembly becomes greater, thereby increasing the energy density of the secondary battery. When H₂ is less than 1 mm, the bendable height of the second adhesive body is relatively small, the increase in the energy density of the secondary battery is relatively small, and the benefit is low. When H₂ is greater than half the height of the tab adhesive, H₁ is excessively small, resulting in an excessively high packaging defect rate of the secondary battery.

As can be seen from Embodiment 1 versus Embodiment 5-2, when H₁ is less than Wt₂+1 mm (that is, 2.7 mm), the packaging defect rate of the secondary battery increases, thereby leading to an increase in production cost.

It is hereby noted that although preferred embodiments of this application have been given in the specification and drawings of this application, this application may be implemented in many different forms, without being limited to the embodiments described herein. The embodiments are not intended to limit the content of this application, but merely to facilitate thorough and comprehensive understanding of the content disclosed herein. In addition, all kinds of embodiments that are not enumerated above but are derived by further combination of the foregoing technical features still fall within the scope covered by this application. Further, all improvements and variations, which may be made by a person of ordinary skill in the art based on the foregoing description, still fall within the protection scope of the claims appended hereto.

## Claims

1. A tab assembly (100), comprising: a tab (1) and a tab adhesive (2); wherein, along a thickness direction (X) of the tab (1), the tab (1) comprises a first surface (11) and a second surface (12) opposite to each other, both the first surface (11) and the second surface (12) are provided with the tab adhesive (2), the tab adhesive (2) provided on the first surface (11) and the tab adhesive (2) provided on the second surface (12) jointly wrap the tab (1); along a length direction (Y) of the tab (1), the tab (1) comprises a first end (1a) and a second end (1b) opposite to each other; **characterized in that**,
the tab adhesive (2) comprises a first layer (21) and a second layer (22), the first layer (21) and the second layer (22) are stacked along a direction from the first end (1a) to the second end (1b), the first layer (21) comprises a first adhesive body (211), the second layer (22) comprises at least one layer of a second adhesive body (221); a material of the second adhesive body (221) comprises one or more selected from the group consisting of polyethylene, polypropylene and polyethylene terephthalate; and
a thickness of the tab (1) is Tᵢ, and a thickness of the second adhesive body (221) is T₂, satisfying: Tᵢ ≥ 80 µm, and T₂ ≤ 70 µm.

2. The tab assembly (100) according to claim 1, **characterized in that**, T₂ ≤ 60 µm.

3. The tab assembly (100) according to claim 1 or 2, **characterized in that**, T₂ ≥ 40 µm.

4. The tab assembly (100) according to any one of claims 1 to 3, **characterized in that**,
a material of the first adhesive body (211) comprises one or more selected from the group consisting of polyethylene, polypropylene and polyethylene terephthalate.

5. The tab assembly (100), according to claim 4, **characterized in that**, the material of the first adhesive body (211) further comprises a plasticizer, the plasticizer is mixed into the at least one of polyethylene, polypropylene, or polyethylene terephthalate to obtain the material of the first adhesive body (211); the material of the second adhesive body (221) further comprises the plasticizer, the plasticizer is mixed into the at least one of polyethylene, polypropylene, or polyethylene terephthalate to obtain the material of the second adhesive body (221); the plasticizer comprises one or more selected from the group consisting of binary ethylene-propylene rubber, ternary ethylene propylene diene monomer rubber and poly(styrene-b-butadiene-b-styrene); a mass percent of the plasticizer in the first adhesive body (211) is a, and a mass percent of the plasticizer in the second adhesive body (221) is b, a < b; and
a thickness of the first adhesive body (211) is T₁, and MAX(70 µm, 70%Tᵢ) ≤ T₁ ≤ 1.5Tᵢ, and T₂ ≤ T₁.

6. The tab assembly (100) according to claim 4 or 5, **characterized in that**,
the material of the first adhesive body (211) is identical to the material of the second adhesive body (221).

7. The tab assembly (100) according to claim 4 or 6, **characterized in that**,
a thickness of the first adhesive body (211) is T₁, MAX(70 µm, 70%Tᵢ) ≤ T₁ ≤ 1.5Tᵢ.

8. The tab assembly (100) according to claim 5 or 7, **characterized in that**, MAX(70 µm, 80%Tᵢ) ≤ T₁ ≤ 1.5Tᵢ.

9. The tab assembly (100) according to any one of claims 5, 7, or 8, **characterized in that**, T₁/T₂ ≤ 2.5.

10. The tab assembly (100) according to any one of claims 1-9, **characterized in that**, a height of the second layer (22) along the direction from the first end (1a) to the second end (1b) is H₂, and a height of the tab adhesive (2) along the direction from the first end (1a) to the second end (1b) is H, 1 mm ≤ H₂ ≤ 1/2H.

11. The tab assembly (100) according to any one of claims 1 to 10, **characterized in that**,
the second adhesive body (221) is configured as a stepped-shape, and a width of the second adhesive body (221) decreases progressively along the direction from the first end (1a) to the second end (1b); or
the second layer (22) further comprises at least one layer of the first adhesive body (211), and the first adhesive body (211) and the second adhesive body (221) are alternately stacked along the length direction (Y) of the tab (1).

12. A secondary battery (1000), **characterized in that**, the secondary battery (1000) comprises: a packaging bag (200), a cell body (300), and the tab assembly (100) according to any one of claims 1 to 11; the packaging bag (200) comprises a main portion (201) and a top seal portion (202); the top seal portion (202) is connected to the main portion (201); the top seal portion (202) comprises a sealed region (2022); the cell body (300) is accommodated in the main portion (201); the first end (1a) is electrically connected to the cell body (300); the second end (1b) passes through the sealed region (2022) and extends out of the packaging bag (200); at least a part of the first layer (21) is disposed on the top seal portion (202); and at least a part of the second adhesive body (221) in the second layer (22) is located outside the packaging bag (200).

13. The secondary battery (1000) according to claim 12, **characterized in that**,
along the length direction (Y) of the tab (1), a width of the sealed region (2022) is Wt₂, and a height of the first layer (21) is H₁, H₁ ≥ Wt₂ + 1 mm.

14. A battery module, **characterized in that**, the battery module comprises a circuit board and the secondary battery (1000) according to claim 12 or 13; a part, located outside the packaging bag (200) and wrapped with the second adhesive body (221), of the tab (1) is referred to as a bend portion (1c), and the bend portion (1c) and the second adhesive body (221) that wraps the bend portion (1c) are bent together along a direction from the second end (1b) to the first end (1a).

15. An electrical device, **characterized in that**, the electrical device comprises the battery module according to claim 14.
